(19) Europäisches Patentamt / European Patent Office / Office européen des brevets

(11) **EP 3 667 391 B1**

(12) **EUROPÄISCHE PATENTSCHRIFT**

(45) Veröffentlichungstag und Bekanntmachung des Hinweises auf die Patenterteilung:
**14.01.2026  Patentblatt 2026/03**

(51) Internationale Patentklassifikation (IPC):
**G02B 21/00** (2006.01)

(52) Gemeinsame Patentklassifikation (CPC):
**G02B 21/0072; G02B 21/0036; G02B 21/0076; G02B 21/008**

(21) Anmeldenummer: **20151281.1**

(22) Anmeldetag: **22.10.2010**

(54) **MIKROSKOPISCHES VERFAHREN UND MIKROSKOP MIT GESTEIGERTER AUFLÖSUNG**

MICROSCOPIC METHOD AND MICROSCOPE WITH IMPROVED RESOLUTION

PROCÉDÉ MICROSCOPIQUE ET MICROSCOPE DOTÉ D'UNE DISSOLUTION AMÉLIORÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.10.2009  DE 102009051291**

(43) Veröffentlichungstag der Anmeldung:
**17.06.2020  Patentblatt 2020/25**

(62) Dokumentnummer(n) der früheren Anmeldung(en) nach Art. 76 EPÜ:
**10013882.5 / 2 317 362**

(73) Patentinhaber: **Carl Zeiss Microscopy GmbH 07745 Jena (DE)**

(72) Erfinder:
• **Kleppe, Ingo**
  **07749 Jena (DE)**
• **Netz, Ralf**
  **07745 Jena (DE)**
• **Novikau, Yauheni**
  **99510 Apolda (DE)**

(74) Vertreter: **Patentanwälte Geyer, Fehners & Partner mbB**
  **Perhamerstrasse 31**
  **80687 München (DE)**

(56) Entgegenhaltungen:
WO-A1-2004/053558    WO-A1-2007/009812
US-A1- 2008 212 866    US-A1- 2009 147 354
US-A1- 2009 219 607

• R. HEINTZMANNT.M. JOVINC. CREMER.: "Saturated pattemed excitation microscopy - A concept for optical resolution improvement", J. OPT. SOC. AM. A, vol. 19, no. 8, 20 February 2001 (2001-02-20), pages 1599 - 1609, XP001205618
• BERTERO M ET AL: "Super-resolution in confocal scanning microscopy", INVERSE PROBLEMS, INSTITUTE OF PHYSICS PUBLISHING, BRISTOL, GB, vol. 3, no. 2, 1 May 1987 (1987-05-01), pages 195 - 212, XP020030324, ISSN: 0266-5611, DOI: 10.1088/0266-5611/3/2/006
• MCCUTCHEN C W: "SUPERRESOLUTION IN MICROSCOPY AND THE ABBE RESOLUTION LIMIT", JOURNAL OF THE OPTICAL SOCIETY OF AMERICA, AMERICAN INSTITUTE OF PHYSICS, NEW YORK; US, vol. 57, no. 10, 1 October 1967 (1967-10-01), pages 1190 - 1192, XP000577275, ISSN: 0093-5433, DOI: 10.1364/JOSA.57.001190
• C.J.R. SHEPPARD ET AL: "Image formation in the scanning microscope", JOURNAL OF MODERN OPTICS, vol. 24, no. 10, 1 January 1977 (1977-01-01), pages 1051 - 1073, XP055745249, DOI: 10.1080/713819421
• C J.R. SHEPPARD: "Super-resolution in confocal imaging", OPTIK - INTERNATIONAL JOURNAL FOR LIGHT AND ELECTRON OPTICS, vol. 80, no. 2, 1 January 1988 (1988-01-01), pages 53 - 54, XP055196207

**(Forts. nächste Seite)**

- HEIN B ET AL: "Stimulated emission depletion (STED) nanoscopy of a fluorescent protein-labeled organelle inside a living cell", PROCEEDINGS OF THE NATIONAL ACADEMY OF SCIENCES (PNAS), NATIONAL ACADEMY OF SCIENCES, vol. 105, no. 38, 23 September 2008 (2008-09-23), pages 14271 - 14276, XP002567614, ISSN: 0027-8424, [retrieved on 20080916], DOI: 10.1073/PNAS.0807705105
- HUFF JOSEPH ET AL: "The Airyscan Detector from ZEISS Confocal Imaging with Improved Signal-to-Noise Ratio and Superresolution The Airyscan Detector from ZEISS Confocal Imaging with Improved Signal-to-Noise Ratio and Superresolution", 31 July 2015 (2015-07-31), XP093222159, Retrieved from the Internet <URL:https://bcf.technion.ac.il/wp-content/uploads/2018/08/EN_41_013_105_wp_Airyscan-detector.pdf>
- BARTH M ET AL: "BOOSTING THE OPTICAL TRANSFER FUNCTION WITH A SPATIALLY RESOLVING DETECTOR IN A HIGH NUMERICAL APERTURE CONFOCAL REFLECTION MICROSCOPE", OPTIK, WISSENSCHAFTLICHE VERLAG GMBH, DE, vol. 96, no. 2, 1 April 1994 (1994-04-01), pages 53 - 58, XP000434220, ISSN: 0030-4026
- "Cell Biology", vol. 3, 1 January 2006, ELSEVIER, ISBN: 978-0-12-164730-8, article R HEINTZMANN: "Band Limit and Appropriate Sampling in Microscopy", pages: 29 - 36, XP055403893, DOI: 10.1016/B978-012164730-8/50131-3

## EP 3 667 391 B1

**Beschreibung**

Die Erfindung bezieht sich auf ein mikroskopisches Verfahren und Mikroskop mit gesteigerter Auflösung. US 2009/0219607 A1 betrifft eine solche Vorrichtung und ein solches Verfahren zur verbesserten Mikroskopie biologischer Nanostrukturen.

Ein klassisches Anwendungsgebiet der Lichtmikroskopie zur Untersuchung von biologischen Präparaten ist die Lumineszenzmikroskopie. Hierbei werden bestimmte Farbstoffe (sogenannte Phosphore oder Fluorophore) zur spezifischen Markierung von Proben, z.B. von Zellteilen, verwendet. Die Probe wird, wie erwähnt, mit Anregungsstrahlung darstellender Beleuchtungsstrahlung beleuchtet und die dadurch angeregte Lumineszenzstrahlung mit geeigneten Detektoren erfasst. Üblicherweise ist dazu im Mikroskop ein dichroitischer Strahlteiler in Kombination mit Blockfiltern vorgesehen, die die Lumineszenzstrahlung von der Anregungsstrahlung abspalten und eine getrennte Beobachtung ermöglichen. Durch dieses Vorgehen ist die Darstellung einzelner, verschieden gefärbter Zellteile im Mikroskop möglich. Natürlich können auch mehrere Teile eines Präparates gleichzeitig mit verschiedenen, sich spezifisch an unterschiedliche Strukturen des Präparates anlagernden Farbstoffen eingefärbt werden. Dieses Verfahren bezeichnet man als Mehrfachlumineszenz. Auch kann man Proben vermessen, die per se, also ohne Farbstoffzugabe lumineszieren.

Lumineszenz wird hier, wie allgemein üblich, als Oberbegriff für Phosphoreszenz und Fluoreszenz verstanden, erfasst also beide Prozesse. Soweit hier von Fluoreszenz gesprochen wird, ist das pars pro toto und nicht einschränkend zu verstehen.

Zur Probenuntersuchung ist es auch bekannt, Laser-Scanning-Mikroskope (auch LSM abgekürzt) zu verwenden, die aus einem dreidimensional ausgeleuchteten Bild mittels einer konfokalen Detektionsanordnung (dann spricht man von einem konfokalen LSM) oder einer nichtlinearen Probenwechselwirkung (sogenannte Multiphotonenmikroskopie) nur diejenige Ebene abbilden, die sich in der Fokusebene des Objektives befindet. Es wird ein optischer Schnitt gewonnen, und die Aufzeichnung mehrerer optischer Schnitte in verschiedenen Tiefen der Probe erlaubt es anschließend mit Hilfe eines geeigneten Datenverarbeitungsgerätes ein dreidimensionales Bild der Probe zu generieren, das aus den verschiedenen optischen Schnitten zusammengesetzt ist. Die Laser-Scanning-Mikroskopie ist somit zur Untersuchung von dicken Präparaten geeignet.

Natürlich wird auch eine Kombination von Lumineszenzmikroskopie und Laser-Scanning-Mikroskopie verwendet, bei der eine lumineszierende Probe in verschiedenen Tiefenebenen mit Hilfe eines LSM abgebildet wird.

US 5043570 beschreibt einen Versuch, die Auflösung durch "oversampling" zu erhöhen. Dies führt nicht zu einer deutlich verbesserten Auflösung unterhalb der Beugungsgrenze des Mikroskops. Eine auflösungserhöhende Methode ist aus M. Barth et al., "BOOSTING THE OPTICAL TRANSFER FUNCTION WITH A SPATIALLY RESOLVING DETECTOR IN A HIGH NUMERI-CAL APERTURE CONFOCAL REFLECTION MICROSCOPE", Optik, Wissenschaftliche Verlagsgesellschaft, Bd. 96, Nr. 2, April 1994, Seiten 53-58, ISSN 0030-4026, bekannt.

Prinzipiell ist die optische Auflösung eines Lichtmikroskops, auch die eines LSM, durch die physikalischen Gesetze beugungsbegrenzt. Zur optimalen Auflösung innerhalb dieser Grenzen sind spezielle Beleuchtungskonfigurationen bekannt, wie beispielsweise 4Pi-Anordnung oder Anordnungen mit Stehwellenfeldern. Damit kann die Auflösung, insbesondere in axialer Richtung gegenüber einem klassischen LSM deutlich verbessert werden. Mit Hilfe nichtlinearer Entvölkerungsprozesse kann weiter die Auflösung auf einen Faktor von bis zu 10 gegenüber einem beugungsbegrenzten konfokalen LSM angehoben werden. Ein solches Verfahren ist beispielsweise in der US 5866911 beschrieben. Für die Entvölkerungsprozesse sind verschiedene Ansätze bekannt, beispielsweise wie in der DE 4416558 C2, US 6633432 oder DE 10325460 A1 beschrieben.

Ein weiteres hochauflösendes Mikroskopieverfahren wird in US 5867604 angesprochen, in der ein Objekt mit einer periodischen Struktur abgetastet wird.

Ein weiteres ähnliches Verfahren zur Auflösungssteigerung wird in der EP 1157297 B1 angesprochen. Dort sollen mittels strukturierter Beleuchtung nichtlineare Prozesse ausgenützt werden. Als Nichtlinearität erwähnt die Druckschrift dabei die Sättigung der Fluoreszenz. Das geschilderte Verfahren nimmt in Anspruch, durch eine strukturierte Beleuchtung eine Verschiebung des Objektraumspektrums relativ zur Übertragungsfunktion des optischen Systems zu realisieren. Konkret bedeutet die Verschiebung des Spektrums, dass Objektraumfrequenzen V0 bei einer Raumfrequenz V0 - Vm, wobei Vm die Frequenz der strukturierten Beleuchtung ist, übertragen werden. Bei gegebener durch das System maximal übertragbarer Raumfrequenz ermöglicht dies den Transfer von um die Verschiebefrequenz Vm über der maximalen Frequenz der Übertragungsfunktion liegender Raumfrequenzen des Objektes. Dieser Ansatz erfordert einen Rekonstruktionsalgorithmus zur Bilderzeugung und die Verwertung mehrerer Aufnahmen für ein Bild. Auch ist es bei diesem Verfahren als nachteilig anzusehen, dass die Probe in Bereichen außerhalb des detektierten Fokus unnötig mit Strahlung belastet wird, da die notwendige strukturierte Beleuchtung das gesamte Probenvolumen durchsetzt. Im Übrigen kann dieses Verfahren derzeit bei dicken Proben nicht verwendet werden, da außerfokal angeregte Fluoreszenz als Untergrundsignal mit auf den Detektor gelangt und somit den Dynamikbereich der nachgewiesenen Strahlung drastisch reduziert.

Ein Verfahren, das unabhängig von der Laserscanningmikroskopie eine Auflösung jenseits der Beugungsgrenze erreicht, ist aus der WO 2006/127692 und der DE 102006021317 A1 bekannt. Dieses mit PALM abgekürzte Verfahren (Photo Activated Light Microscopy) verwendet eine Markierungssubstanz, welche mittels eines optischen Aktivierungssignals aktiviert werden kann. Nur im aktivierten Zustand kann die Markierungssubstanz mit Anregungsstrahlung zur Abgabe von bestimmter Fluoreszenzstrahlung angeregt werden. Nicht aktivierte Moleküle der Markierungssubstanz senden auch nach Einstrahlung von Anregungsstrahlung keine oder zumindest keine merkliche Fluoreszenzstrahlung ab. Die Aktivierungsstrahlung schaltet die Markierungssubstanz also in einen Zustand, in dem sie zur Fluoreszenz anregbar ist. Auch andere Aktivierung, z.B. thermischer Art, sind möglich. Man spricht deshalb allgemein von einem Umschaltsignal. Im PALM-Verfahren wird nun das Umschaltsignal so aufgebracht, dass zumindest ein gewisser Anteil der aktivierten Markierungsmoleküle von benachbarten aktivierten Molekülen so beabstandet sind, dass sie gemessen an der optischen Auflösung der Mikroskopie getrennt oder nachträglich trennbar sind. Die aktivierten Moleküle werden also zumindest weitgehend isoliert. Nach Aufnahme der Lumineszenzstrahlung wird für diese isolierten Moleküle wird dann das Zentrum deren auflösungsbegrenzt bedingten Strahlungsverteilung ermittelt und daraus rechnerisch die Lage der Moleküle mit höherer Genauigkeit bestimmt, als es die optische Abbildung eigentlich zulässt. Diese gesteigerte Auflösung durch rechnerische Schwerpunktbestimmung der Beugungsverteilung wird in der englischen Fachliteratur auch als "superresolution" bezeichnet. Sie erfordert, dass in der Probe zumindest einige der aktivierten Markierungsmoleküle mit der optischen Auflösung mit der die Lumineszenzstrahlung detektiert wird, unterscheidbar, also isoliert sind. Dann kann für solche Moleküle die Ortsangabe mit gesteigerter Auflösung erreicht werden.

Zum Isolieren einzelner Markierungsmoleküle nutzt das PALM-Verfahren die Tatsache, dass die Wahrscheinlichkeit, mit der ein Markierungsmolekül nach Empfang des Umschaltsignals gegebener Intensität, z.B. eines Photons der Aktivierungsstrahlung aktiviert wird, für alle Moleküle gleich ist. Über die Intensität des Umschaltsignals und damit die Zahl der Photonen, die auf eine Flächeneinheit der Probe fällt, kann also dafür gesorgt werden, dass die Wahrscheinlichkeit, in einem gegebenen Flächenbereich der Probe vorhandene Markierungsmoleküle zu aktivieren, so gering ist, dass es ausreichend Bereiche gibt, in denen innerhalb der optischen Auflösung nur unterscheidbare Markierungsmoleküle Fluoreszenzstrahlung emittieren. Durch passende Wahl der Intensität, z.B. der Photonendichte, des Umschaltsignals, wird erreicht, dass möglichst nur bezogen auf die optische Auflösung isoliert liegende Markierungsmoleküle aktiviert werden und nachfolgend Fluoreszenzstrahlung aussenden. Für diese isolierten Moleküle wird dann rechnerisch der Schwerpunkt der beugungsbedingten Intensitätsverteilung und damit die Lage des Markierungsmoleküls mit gesteigerter Auflösung ermittelt. Zur Abbildung der gesamten Probe wird die Isolierung der Markierungsmoleküle der Teilmenge durch Einbringen der Aktivierungsstrahlung, nachfolgende Anregung und Fluoreszenzstrahlungsabbildung so lange wiederholt, bis möglichst alle Markierungsmoleküle einmal in einer Teilmenge enthalten und innerhalb des Auflösung der Abbildung isoliert waren.

Das PALM-Verfahren hat dabei den Vorteil, dass weder für die Aktivierung, noch die für Anregung eine hohe Ortsauflösung benötigt wird. Stattdessen kann sowohl die Aktivierung als auch die Anregung in Weitfeldbeleuchtung erfolgen.

Im Ergebnis werden die Markierungsmoleküle durch geeignete Wahl der Intensität der Aktivierungsstrahlung statistisch in Teilmengen aktiviert. Deshalb muss für die Generierung eines Gesamtbildes einer Probe, in dem die Positionen aller Markierungsmoleküle rechnerisch mit z.B. jenseits der Beugungsgrenze liegender Auflösung bestimmt werden können, eine Vielzahl von Einzelbildern ausgewertet werden. Es können bis zu 10.000 Einzelbilder sein. Dies hat zur Folge, dass große Datenmengen verarbeitet werden, und die Messung entsprechend lange dauert. Schon die Aufnahme eines Gesamtbildes erfordert mehrere Minuten, was im Wesentlichen durch die Ausleserate der verwendeten Kamera festgelegt ist. Die Positionsbestimmung der Moleküle in den Einzelbildern erfolgt durch aufwendige rechnerische Prozeduren, wie sie beispielsweise in Egner et al., Biophysical Journal, S. 3285-3290, Band 93, November 2007, beschrieben ist. Die Bearbeitung aller Einzelbilder und das Zusammensetzen zu einem hochaufgelösten Gesamtbild, also ein Bild, in dem die Orte der Markierungsmoleküle mit einer jenseits der Beugungsgrenze liegenden Auflösung angegeben sind, dauert typischerweise 1-2 Stunden.

WO 2007/009812 A1 befasst sich mit der auflösungsgesteigerten Lumineszenzmikroskopie, wobei eine Nichtlinearität eines Farbstoffs ausgenutzt wird, indem ein spezielles Beleuchtungsmuster eingestrahlt wird, das mehrere Flächenelemente der Probe gleichzeitig überdeckt. US 2009/0147354 A1 betrifft eine Beleuchtungsvorrichtung in der Mikroskopie zum Erzeugen eines Beleuchtungsmusters. WO 2004/053558 A1 betrifft die Lichtblattmikroskopie.

Weitere Artikel zu hochaufgelösten Verfahren sind: Hell, S. W. (2007): "Far-Field Optical Nanoscopy", Science 316, 1153 - 1158, und zur SAX (Saturated exitation) Microscopy Fujita et al., Phys. Rev. Lett. (2007), sowie Yamanaka et al., J. Biomed. Opt. (2008)).

Die hochauflösenden Verfahren nach dem Stand der Technik weisen verschiedene Nachteile auf: Für das STED-Verfahren ist es die Verfügbarkeit von Farbstoffen und die erforderliche hohe Laserintensität. Bei RESOLFT / GSD ist eine hohe Zahl von Schaltzyklen erforderlich. PAL-M / STORM hat eine langsame Bilderzeugungsgeschwindigkeit. Bei SAX werden die Farbstoffe stark ausgebleicht.

Die Erfindung betrifft ein Verfahren und eine Vorrichtung zur Erzielung einer mikroskopischen Auflösung unterhalb der Beugungsgrenze des Mikroskops gemäß den unabhängigen Ansprüchen.

Die Erfindung ist in den Ansprüchen 1 und 8 definiert. Bevorzugte Weiterbildungen sind Gegenstand der abhängigen Ansprüche.

Die Erfindung ermöglicht es, hochauflösende Bilder zu erzeugen auch für komplexere Proben als einer aus Einzelmolekülen bestehenden Probe. Hierbei wird die räumliche Veränderung von Grauverteilungen ausgenutzt.

Das Verfahren umfasst die folgenden wesentlichen Schritte:

a. Mit einer Genauigkeit, die über der erreichbaren optischen Auflösung liegt, wird die Beleuchtung (ein Beleuchtungsmuster) zur Detektion verschoben.

b. Während der Verschiebung werden mehrere Bilder mit der höchsten erreichbaren optischen Auflösung aufgenommen, die jeweils einer bestimmten Verschiebelage des Beleuchtungsmusters entsprechen.

c. Aus den detektierten Signalen, beispielsweise aus einem Fluoreszenzsignal, der einzelnen Aufnahmen wird ein hochauflösendes Bild berechnet.

d. Durch Verwendung nichtlinearer Anregung und der entsprechenden Fluoreszenzmarker kann die Auflösung weiter verbessert werden.

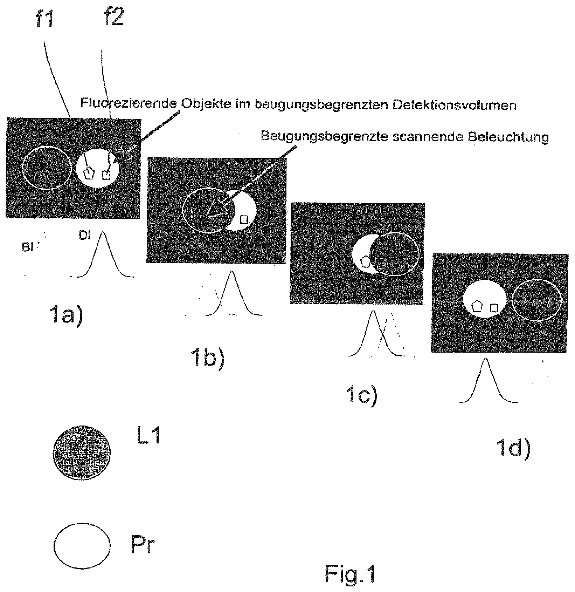

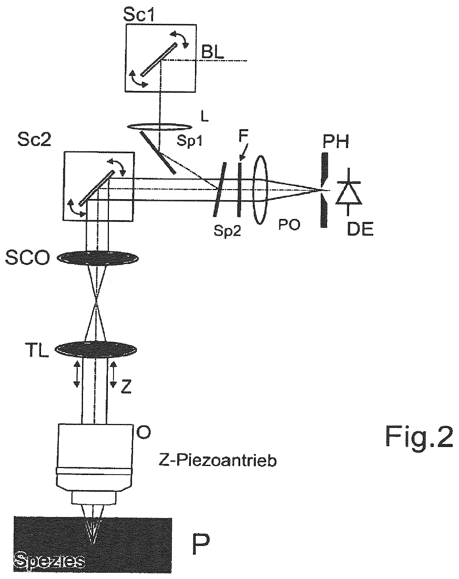

Der Kerngedanke der Erfindung ist anhand eines Beleuchtungsspots eines Laser-ScanningMikroskops in Fig. 1 a) - d) dargestellt. Zu sehen ist, wie das Scanfeld eines Laser-ScanningMikroskops (LSM), siehe auch Fig. 2, durch Verschiebung mit geeigneten Mitteln (Tischverschiebung, zweiter Scanner) über die Probe bewegt wird. L1 ist der Lichtspot des LSM, der in einem definierten Scanraster über die Probe bewegt wird. Dabei werden den einzelnen Stellungen beispielsweise eines Punktlichtstrahls jeweils Detektionswerte zugeordnet, um ein Bild der Probe zu erzeugen. Wegen der Beugungsbegrenzung der optischen Abbildung weisen die einzelnen Scanpunkte einen Mindestabstand auf (beispielsweise 20 nm). Es sind beispielhaft zwei fluoreszierende Objekte f1, f2 in einem beispielhaften Probenbereich Pr in der Probe dargestellt. In Fig. 1 erfolgt bei 1a) keine Detektion von f1, f2 weil sich der gescannte Bereich von L außerhalb des Probenbereichs Pr befindet in dem f1, f2 angeordnet sind. Bei 1b) ist durch Verschiebung des Scanfeldes (des Beleuchtungsrasters, das durch das LSM erzeugt wird) gegen die Detektion um einen Betrag unterhalb der Auflösungsgrenze, beispielsweise 10-20 nm, gezeigt. Das Objekt f1 liegt im Detektionsbereiches des Laserspots L und liefert ein Detektionssignal. Bei 1c) stammt durch die weitere Verschiebung von L1 das Detektionssignal von f2. Bei 1d werden die Objekte f1, f2 wiederum nicht von L erfasst. In Fig. 1 sind auch die Verteilungen der jeweiligen Beleuchtungsintensität B und Detektionsintensität D dargestellt.

Auf das Berechnungsverfahren zur Trennung/Rekonstruktion des Signals der einzelnen Objekte durch Entfaltung der Signale wird weiter unten eingegangen. Da der Beleuchtungsspot in einem LSM mit größerer Genauigkeit eingestellt werden kann als die beugungsbegrenzte Auflösung des Mikroskops, kann durch Verschiebung des Beleuchtungsrasters relativ zur Detektion die Auflösung erhöht werden.

In Fig. 2 ist eine Ausführungsform der Erfindung dargestellt. Sie besteht aus einem Laser-Scanning-Mikroskop, dessen Grundprinzip verschiedentlich, beispielsweise in DE 19702753, ausführlich beschrieben ist. In diesem Fall wird jedoch gemäß der vorliegenden Erfindung das Beleuchtungslicht BL über einen ersten Scanner SC1, Linse L und Umlenkspiegel SP1 und einen teildurchlässigen Spiegel SP2 in Richtung eines zweiten Scanners SC 2 (des X/Y Scanners des LSM) geleitet und von diesem über eine Scanoptik SCO, Tubuslinse TL und Objektiv O auf eine Probe P fokussiert. Das Probenlicht gelangt auf dem Rückweg über SC2, SP2, Filter F und eine Pinholeoptik PO und ein Pinhole PH auf einen Detektor DE zur konfokalen Detektion.

Dabei wird ein schneller Scanner SC2 (LSM) mit einem langsamen Scanner SC1 kombiniert.

Der Scanner SC1 verschiebt das Beleuchtungsraster des LSM gegen die Detektion, wie anhand von Fig. 1 bereits dargestellt. Bei jedem Schritt des Scanners SC1 erfolgt eine Abrasterung der Probe mit SC2. Hierdurch wird eine gaußförmige Beleuchtungsfunktion (Fig. 1) langsam über die Probe - relativ zur Detektion - verschoben. Die Verschiebung und jeweilige Bildaufnahme erfolgt beispielsweise in 10 nm Schritten.

Die Zahl der Einzelpositionen richtet sich nach der zu erreichenden Auflösung.

Besonders vorteilhaft ist ebenfalls die Verwendung von mehreren konfokalen Detektoren gleichzeitig, wobei einer immer mit der Anregung läuft (standard confocal) und weitere Detektoren unabhängig davon konfokal in die Probe schauen. Der Vorteil besteht zum einen in der Nutzung allen Fluoreszenzlichtes, zum anderen in der Verbesserung des SNR was ebenfalls mit in die Auswertung einfließen kann, da für dieselbe Beleuchtung mehrere Messpunkte detektiert werden.

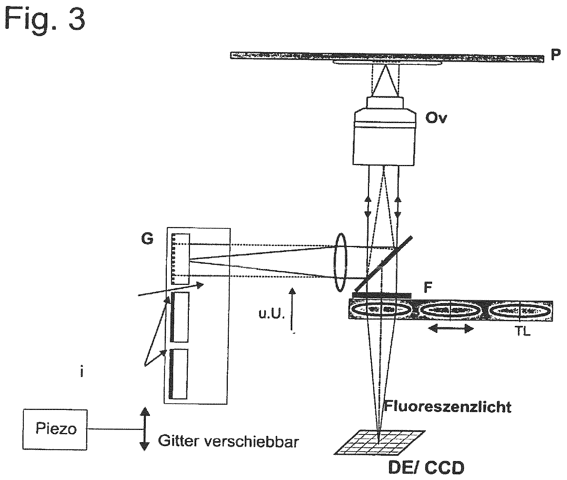

In Fig. 3 ist eine nicht die Erfindung realisierende Weitfeldausführung mit einem Gitter zur Beleuchtungsmodulierung dargestellt. Statt eines Gitters kann ein analog optisch wirkendes Lichtmuster oder Interferenzmuster eingesetzt werden. Die Probe P wird über ein Liniengitter G und das Objektiv O im Weitfeld (mit einer nicht dargestellten Lichtquelle) beleuchtet. Zur Trennung von Beleuchtungs- und Detektionslicht ist ein Strahlteiler ST vorgesehen. Das Probenlicht wird über Filter F, auswechselbare Tubuslinsen TL über einen CCD Empfänger DE ortsauflösend detektiert. Über das Liniengitter G werden Beleuchtungslinien auf der Probe erzeugt. Durch Verschieben des Gitters zur Probe wird quasi ein stehendes Scanfeld, repräsentiert durch die Beleuchtungslinien, hochgenau, beispielsweise mittels eines das Gitter verschiebenden Piezoantriebes PZ, verschoben. Die Größenordnung der Verschiebung liegt hierbei unterhalb des Abstandes der einzelnen Beleuchtungslinien auf der Probe. Die modulierte Beleuchtungsstrahlung, die durch die bekannte Gittermodulation festgelegt wird, wird durch die Gitterverschiebung in zu Fig. 1 analoge Beziehung zur Detektionsmodulation gebracht und ein hochauflösendes Bild kann errechnet werden.

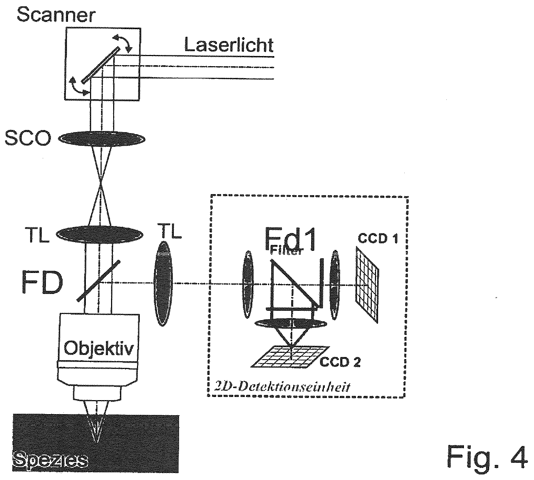

Fig. 4 zeigt eine nicht die Erfindung realisierende, nicht-descannte Ausblendung der Detektion, bei der Laserlicht scannend über die Probe bewegt wird, über einen dichroitischen Spiegel Fd in Richtung einer Detektoranordnung, hier vorzugsweise mit zwei Detektoren CCD1 und CCD 2 in Transmission und Reflektion eines dichroitischen Spiegels Fd1, die beispielsweise unterschiedliche Wellenlängen detektieren können. Es ist auch vorteilhaft eine Anordnung von CCD1 und CCD2 in unterschiedlichen z-Ebenen zur Erhöhung der z-Auflösung (Richtung der optischen Achse) denkbar.

Durch Verschiebung des Scanfeldes und der entsprechenden Signale auf den Detektoren CCD1 und CCD2 um geringe Beträge, wie schon oben erwähnt, kann die Auflösung erhöht werden. Die Verschiebung kann durch geringfügige Verschiebung der Detektion beispielsweise entlang einer X-Richtung senkrecht zur optischen Achse z erfolgen, aber auch beispielhaft durch Verschiebung der Probe oder durch einen zweiten Scanner, wie anhand von Fig. 2 beschrieben.

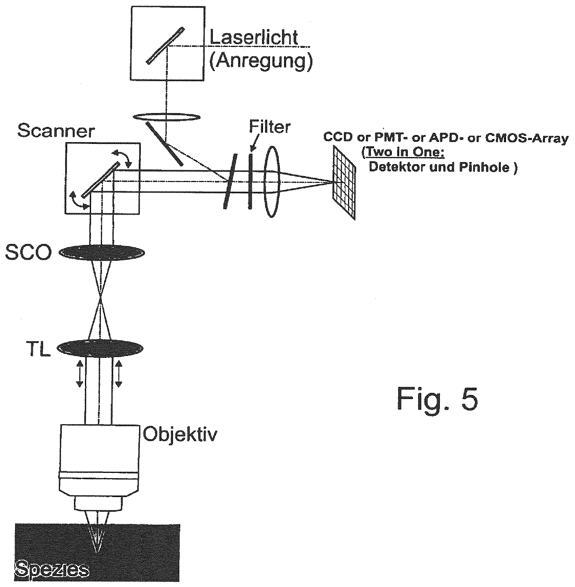

Fig. 5 zeigt eine nicht die Erfindung realisierende Anordnung, bei der eine descannte Abbildung auf einen Flächendetektor, wie einen CCD Empfänger oder ein PMT- oder APD oder CMOS Array, erfolgt. Das Pinhole des Scanningmikroskops ist hier durch Auslesen nur bestimmter Detektorpixel ersetzt. Jede Detektoruntereinheit detektiert quasi konfokal. Die Verschiebung zur Detektion wird hier durch eine "Verschiebung" im Sinne des Wechsels zwischen vorzugsweise benachbarten Detektorelementen (Pixeln) simuliert. Dabei werden durch geeignete Schaltung der Detektorpixel Verschiebungen bezüglich der Detektion eingestellt, die den in den oben geschilderten Ausführungen entsprechen, ohne dass eine direkte mechanische Bewegung erzeugt werden muss. Durch Pixelversatz entsteht vorteilhaft die Wirkung einer Verschiebung eines Detektionsfeldes zu einem Beleuchtungsfeld. Dies ist sinngemäß auch bei einer nondescannten Detektion wie in Fig. 4 möglich, beispielsweise vorteilhaft anstelle einer weiteren Bewegung, beispielsweise der Probe. Voraussetzung zur Auflösungserhöhung ist natürlich (unter Berücksichtigung des Abbildungsmaßstabes der Abbildungsoptik des Mikroskops), dass die effektive Pixelgröße am Ort des Detektors nur ein Bruchteil der Halbwertsbreite der PSF beträgt, beispielsweise ein Viertel.

Erhöhung der vertikalen (z)-Auflösung:

Eine erfindungsgemäße Hochauflösung kann in analoger Weise auch in vertikaler (z)-Richtung erzielt werden, indem bei der Abtastung der Probe in bekannter Weise in z-Stapeln durch eine zusätzliche Verschiebung in z-Richtung ein Abstand zwischen der Fokalebene und der Beleuchtungsebene geschaffen und jeweils detektiert wird. Beispielsweise kann in Fig. 2 eine in z-Richtung verschiebbare Linse, dargestellt anhand der Tubuslinse TL schematisch mit Pfeilen in z-Richtung, vorgesehen sein, um den Fokus, der, beispielsweise durch ein Piezoobjektiv, in z-Richtung verstellt wird, bei der Aufnahme von z-Stapeln in Zwischenstellungen zwischen den einzelnen z-Stellungen bei der Bildaufnahme zu bringen.

Die Verallgemeinerung des Prinzips führt zu der folgenden Methode für die Rekonstruktion von Probeninformationen, die eine Ausdehnung kleiner als die Beugungsgrenze haben.

Grundbetrachtungen:

Die Intensität an jedem Bildpunkt kann in der folgenden Form angegeben werden:

$$D(x_0) \propto \int_{-\infty}^{\infty} H(x - x_0) \cdot I(x) \cdot c(x)dx$$

Dabei handelt es sich bei $c(x)$ um die Konzentration der Fluorophore, $H$ ist die "Point-Spread-Funktion" der Detektion, $I(x)$ ist die Beleuchtungsintensität am Ort x, die für den Fall eines "Scanning"-Mikroskops die "Point-Spread-Funktion" der Beleuchtung darstellt.

Für den Fall eines pixelierten Kamera-Detektors geht das Integral in eine Riemann-Summe über. Wird nun der Anregungs-Spot oder das Anregungs-Muster mit hoher Genauigkeit entlang der x-Richtung über die Probe bewegt, so erhält man folgendes Gleichungssystem:

$$D_{1,j} = \sum_j I_{1,j} \cdot c_j \cdot H_{1,j}$$

$$D_{2,j} = \sum_j I_{2,j} \cdot c_j \cdot H_{2,j}$$

$$\vdots$$

$$D_{n,j} = \sum_j I_{n,j} \cdot c_j \cdot H_{n,j}$$

mit n als Index für die verschiedenen Beleuchtungseinstellungen und j als Index für den Detektor(Kamera)-Pixel.

Da das Beleuchtungsmuster und die "Point-Spread-Funktion" $H$ i.a. gut bekannt sind, ist die Lösung des hochgradig überbestimmten Gleichungssystems z.B. durch Pseudo-Matrix-Inversion ("Penrose Moore Inverse") - analog zum "Zeiss-Unmixing"-Algorithmus - relativ einfach möglich. Das Signal-Rausch-Verhältnis der überabgetasteten Region limitiert die mögliche Auflösung. Das "Laser-Scanning"-Mikroskop ist in dieser Hinsicht ideal, da die Spots intrinsisch das Beugungslimit erreichen. Die Zahl der notwendigen Iterationen wird klein sein. Im Allgemeinen kann für jede Messung die Zahl der Iterationen gegenüber der Modulationstiefe mit dem Signal-Rausch-Verhältnis optimiert werden, um eine bestmögliche Auflösungssteigerung zu erreichen.

Es ist zu bemerken, dass die Auflösungssteigerung sich nur in "Scan"-Richtung ergibt. Analog zur strukturierten Beleuchtungsmethode ermöglicht das Scannen der Probe in mindestens drei Richtungen, Bildinformationen in höherer Auflösung aus den Messdaten rekonstruieren zu können.

Mathematischer Formalismus:

Das eindimensionale Bild ist durch das folgende Integral gegeben:

$$D(x,p) = \int_{x'} O(x') E(x'-p) H(x-x') dx'$$

wobei $O(x)$ das Objekt repräsentiert, $E(x)$ ist das Anregungsprofil ($p$ ist die Phase, oder der Offset des Anregungsprofils in verschiedenen "Scans"), und $H(x)$ ist die "Point Spread Function" (PSF) der Detektion.

Darstellung des Messsignals im Fourierraum:

$D(x,p)$ kann hinsichtlich der $x$-Koordinate oder hinsichtlich der p-Koordinate fouriertransformiert werden.

Strukturierte Beleuchtung:

Wenn $D(x,p)$ hinsichtlich $x$ fouriertransformiert wird, erhält man:

$$D^f(\omega,p) = FT_{x'}\{O(x')E(x'-p)\}H^f(\omega)$$

Ein Produkt A im Ortsraum wird zu einer Faltung im Fourierraum:

$$D^f(\omega,p) = \left\{ \int_\omega O^f(\omega')E^f(\omega-\omega',p)d\omega' \right\} H^f(\omega)$$

oder

$$D^f(\omega,p) = \left\{ O^f(\omega) \otimes E^f(\omega,p) \right\} H^f(\omega)$$

Die diskrete Darstellung von $E^f(\omega, p)$ sieht im Fourierraum folgendermaßen aus:

$$E^f(\omega, p) = \sum_n e_n(p)\delta(\omega - \omega_n)$$

Damit erhalten wir schlussendlich:

$$D^f(\omega, p) = \sum_n e_n(p)O^f(\omega - \omega_n)H^f(\omega)$$

(1)

Wenn das Anregungsprofil einen einfach-expontiellen Verlauf hat, gilt:

$$E^f(\omega, p) = A\delta(\omega) + B(\omega_g p)\delta(\omega + \omega_g) + B(-\omega_g p)\delta(\omega - \omega_g)$$

und dann wird aus Gleichung (1)

$$D^f(\omega, p) = \{AO^f(\omega) + B(-\omega_g p)O^f(\omega - \omega_g) + B(\omega_g p)O^f(\omega + \omega_g)\}H^f(\omega)$$

(2)

Gleichung (2) verkörpert mathematisch das klassische Konzept zur strukturierten Beleuchtung, bei der $E^f(\omega,\rho)$ die Detektionsbänder definiert und die Detektion OTF $H^f(\omega)$ die Gewichtung der Bänder festlegt.

Scannende Beleuchtung:

Wenn $D(x,p)$ hinsichtlich $p$ fouriertransformiert wird, dann folgt:

$$D^f(x,\omega) = FT_{x'}\{O(x')H(x - x')\}E^f(\omega)$$

Ein Produkt A im Ortsraum wird zu einer Faltung im Fourierraum:

$$D^f(x,\omega) = \left\{\int_\omega O^f(\omega')H^f(x, \omega - \omega')d\omega'\right\}E^f(\omega)$$

oder

$$D^f(x,\omega) = \{O^f(\omega) \otimes H^f(x,\omega)\}E^f(\omega)$$

$H^f(x, \omega)$ kann im Fourierraum als diskrete Reihe von Frequenzkomponenten dargestellt werden:

$$H^f(x,\omega) = \sum_n h_n(x)\delta(\omega - \omega_n)$$

Die Formel des detektierten Bildes lautet dann:

$$D^f(x,\omega) = \sum_n h_n(x)O^f(\omega - \omega_n)E^f(\omega)$$

(3)

Im Vergleich zu Gleichung (1) sind Anregung und Detektion in Gleichung (3) ausgetauscht.

Für einfach exponentielle Anregung

$$E^f(\omega) = A\delta(\omega) + B\delta(\omega + \omega_g) + B\delta(\omega - \omega_g)$$

tragen 3 Frequenzen zum Signal bei. Da jedoch die Detektions-OTF $H^f(x, \omega)$ aus einem (quasi) kontinuierlichen Spektrum von Frequenzen besteht, tragen alle Frequenzen zum Signal bei, die sich aus der Summe von $\omega_g$ und der höchsten sich vom Rauschen unterscheidenden Frequenzkomponente in $H^f(x, \omega)$ ergeben.

Ortsraum (Kamera):

Das an einem CCD-Pixel detektierte Signal lautet:

$$D(x_k, p) = \int_{x_k - \Delta x}^{x_k + \Delta x} D(x, p)dx = \int_{x'} O(x')E(x' - p)dx' \int_{x_k - \Delta x}^{x_k + \Delta x} H(x - x')dx = \int_{x'} O(x')E(x' - p)\hat{H}(x_k, x')dx'$$

Wir betrachten zwei Pixel detektiert am Ort $x_k$ and $x_k + \Delta x$:

$$D(x_k, p) = \int_{x'} O(x')E(x' - p)\hat{H}(x_k, x')dx'$$

$$D(x_k + \Delta x, p) = \int_{x'} O(x')E(x' - p)\hat{H}(x_k + \Delta x, x')dx'$$

Als zu rekonstruierendes Objekt $O(x)$, betrachten wir einen Satz von möglichst gleichverteilten Punkten $h_i$, $i=1,...,m$:

$$O(x) = \sum_{i=1}^{m} a_i\delta(x - h_i)$$

$$(4)$$

wobei $\delta(x)$ die Dirac-Delta Funktion ist, $a_i$ sind die zu rekonstruierenden Bildsignale. In dem gegebenen Modell kann das "over-sampling" mit m/2 quantifiziert werden. Mit (4) nehmen die detektierten Pixel $D(x_k,p)$ and $D(x_k+\Delta x,p)$ die folgende Form an

$$D(x_k, p) = \sum_{i=1}^{m} a_i E(h_i - p)\hat{H}(x_k, h_i)$$

$$D(x_k + \Delta x, p) = \sum_{i=1}^{m} a_i E(h_i - p)\hat{H}(x_k + \Delta x, h_i)$$

Wenn außerdem das Anregungsprofil ein Kosinus und die PSF $H(x)$ ein Gaussprofil ist, dann erhalten wir:

$$D(x_k, p) = \sum_{i=1}^{m} a_i \cos\{\omega(h_i - p)\}\hat{H}(x_k, h_i)$$

$$D(x_k + \Delta x, p) = \sum_{i=1}^{m} a_i \cos\{\omega(h_i - p)\}\hat{H}(x_k + \Delta x, h_i)$$

$$(5)$$

mit

$$\hat{H}(x_k, x') = \int_{x_k - \Delta x}^{x_k + \Delta x} H(x - x') dx = \int_{x_k - \Delta x}^{x_k + \Delta x} \exp\left\{-(x - x')^2 / (2\sigma^2)\right\} dx$$

Die Standardabweichung $\sigma$ kann näherungsweise beschrieben werden mit $\sigma = 0.21\ \lambda/NA$, wobei $\lambda$ die Emissionswellenlänge und $NA$ die numerische Apertur ist.

Die zwei Sätze von linear algebraischen Gleichungen (5) können hinsichtlich der unbekannten $a_0$ und $a_1$ gelöst werden. Es ist zu beachten, dass die Gleichungen (5) zusätzlich durch die Phase des Anregungsprofils parametrisiert sind. Deshalb können mehr linear unabhängige Gleichungen für verschiedene $p$ erzeugt werden. Dies erhöht den Informationsgehalt des Gleichungssatzes (5) und führt schlussendlich zu einer genaueren Rekonstruktion mit besserer Auflösung. Das Gleichungssystem kann schlussendlich in Matrixform angegeben werden:

$$\mathbf{D} = \mathbf{SA}$$

wobei

$$\mathbf{D} = \left[ D(x_k, p_1), D(x_k + \Delta x, p_1), \dots, D(x_k, p_n), D(x_k + \Delta x, p_n) \right]^T$$

$$\mathbf{S} = \begin{bmatrix} \cos\{\omega(h_i - p_1)\} \hat{H}(x_k, h_i) \\ \cos\{\omega(h_i - p_1)\} \hat{H}(x_k + \Delta x, h_i) \\ \dots \\ \cos\{\omega(h_i - p_n)\} \hat{H}(x_k, h_i) \\ \cos\{\omega(h_i - p_n)\} \hat{H}(x_k + \Delta x, h_i) \end{bmatrix}_{i=1,\dots,m}$$

$$\mathbf{A} = \left[ a_i \right]^T_{i=1,\dots,m}$$

und $n$ die Anzahl von Scans ist. Die Elemente der Matrix D sind gemessene Werte, d.h. sie haben einen gewissen Fehler $\Delta\mathbf{D}$. Diese Fehler übertragen sich in die Lösung $\mathbf{A}$, so dass $\mathbf{A}$ mit einen Fehler $\Delta\mathbf{A}$ behaftet ist.

Der Fehler von $\mathbf{A}$ ist bekanntermaßen mit dem Fehler von $\mathbf{D}$ verknüpft über

$$\frac{\|\Delta\mathbf{D}\|}{\|\mathbf{D}\|} \le \kappa(\mathbf{S}) \frac{\|\Delta\mathbf{A}\|}{\|\mathbf{A}\|}$$

wobei $\kappa(\mathbf{S}) = \|\mathbf{S}\|\|\mathbf{S}^{-1}\|$ die Konditionierungszahl der Matrix S und $\|.\|$ die Norm der Matrix sind.

Umso größer die Konditionierungszahl ist, desto weniger resistent ist das System hinsichtlich der Fehler der Eingangsdaten. Eine Möglichkeit zur Abschätzung der Konditionierungszahl ergibt sich durch die Verwendung der singulären Werte der Matrix S:

$$\kappa(\mathbf{S}) = s_{\max}(\mathbf{S}) / s_{\min}(\mathbf{S})$$

wobei $s_{\max}(\mathbf{S})$ und $s_{\min}(\mathbf{S})$ der maximale und minimale singuläre Wert von $\mathbf{S}$ sind.

Die Konditionierungszahl ist also ein Maß dafür, wie gut die Hochauflösungsinformation rekonstruiert werden kann. Aus der Herleitung wird klar, dass die Verbesserung der Auflösung vom Zusammenspiel zweier Faktoren abhängig ist:

1. Vom Signal-zu-Rausch-Verhältnis, ähnlich wie die übliche Dekonvolution. Das heißt, die oben beschriebenen Gleichungen werden aufgrund von Rauschen u.U. als nicht mehr linear unabhängig erkannt und können somit nicht mehr zur Lösung beitragen. Die Lösung verliert Eindeutigkeit.

2. Die Steilheit der "Beleuchtungs-PSF". Je größer die Modulation, desto eher erlangt man linear unabhängige Information, die zur Lösung des Gleichungssystems beitragen kann.

Die Verbesserung der Auflösung sollte mindestens um den Faktor zwei über der konfokalen Auflösung liegen, da die scannende Beleuchtung analog zur strukturierten Beleuchtung mit ihren Frequenzen die Auflösungsgrenze hinausschiebt. Da die höchste in die Probe mit Licht durch das Objektiv abbildbare Frequenz jedoch genauso beugungslimitiert ist, ergibt sich wie oben und auch bei strukturierter Beleuchtung hergeleitet der Faktor zwei. Jedoch gilt hier, dass die konfokale Auflösung der Ausgangspunkt ist und nicht wie bei strukturierter Beleuchtung die Auflösung des Weitfeldmikroskops.

Erste Experimente haben Auflösungen von <90nm gezeigt.

Modulierte Beleuchtung:

Das beschriebene Verfahren (Anregung über die Detektion zu scannen) hat aufgrund des Abfalls der PSF sowohl detektions- als auch anregungsseitig den Nachteil, dass bei nur geringem Überlapp von Anregung und Detektion die gemessene Intensität klein ist und damit das Signal-zu-Rauschverhältnis ebenfalls. Modulation der Beleuchtung, wie z.B. die Erhöhung der Laserintensität über einen AOTF oder direkte Modulation des Laser und bei gepulster Beleuchtung durch Anpassung der Pulsrate oder Höhe oder Anpassung der Belichtungszeit usw., kann diesen Effekt vollständig eliminieren und das SNR für diese Datenpunkte entscheidend verbessern. Hierbei kann die Veränderung der Intensität oder Modulation in einem Regelkreis eine einstellbare Regelgröße zur Erzielung eines optimalen Detektionssignals darstellen.

Besonders attraktiv ist es, das Signal/Rauschverhältnis SNR während des gesamten Vorgangs konstant zu halten oder sogar in den Bereichen mit geringem Überlapp von Anregung und Detektion zu erhöhen, um die Entfaltung (das Lösen des oben beschriebenen linearen Gleichungssystems) entscheidend zu verbessern und damit die Auflösung im Bild. Das Gleichungssystem für die Bildpunkte mit nur geringem Überlapp ist klein, da die meisten detektierten Punkte nicht beleuchtet sind und damit nur Null-Beiträge liefern. Je genauer man also diese Intensitäten messen kann, desto besser kann man dieses kleine Gleichungssystem mit nur wenigen Unbekannten lösen.

Allgemeiner formuliert ermöglicht die Modulation durch Verbesserung des SNR, die gemessene linear unabhängige Information wirklich zu nutzen und nicht im Rauschen zu verlieren.

Aus diesen Überlegungen ergibt sich, dass eine Kombination der Technik mit DIM (Dynamic Illumination Microscopy oder CLEM) besonders vorteilhaft ist, da hier ein voreingestelltes optimales SNR punktweise über die Regelung der Beleuchtung erreicht werden kann.

Außerdem ist eine Kombination mit folgenden nichtlinearen Verfahren denkbar und vorteilhaft:

1. STED/RESOLFT, da dort die PSF schon um einen Faktor 2-3 oder mehr steiler ist, und somit sich die hiermit erzeugte Auflösungssteigerung noch hinzukommt.

2. Verwendung von photoaktivierbaren Farbstoffen, da sich hier die PSF der Aktivierung und der Fluoreszenzanregung multiplizieren und die effektive PSF damit steiler wird.

3. Alle Verfahren wie Saturierung des Farbstoffes etc., die auch für die nichtlineare strukturierte Beleuchtung verwendet werden können (R. Heintzmann, T.M. Jovin, and C. Cremer. Saturated patterned excitation microscopy - A concept for optical resolution improvement. J. Opt. Soc. Am. A, 19(8):1599-1609, 2002).

4. Multiphotonenmikroskopie (EP 500717 B2).

Mögliche vorteilhafte und überraschende Implementierungen der Erfindung sind ohne Anspruch auf Vollständigkeit:

Das Durchschieben einer Blende im Zwischenbild: Das Verfahren funktioniert auch in einfacheren Systemen, bei denen beleuchtungsseitig durch Schieben einer Blende im Zwischenbild dasselbe Verfahren angewendet werden kann. Die Kante der Beleuchtung dient hier als Beleuchtungsgewichtung und wird zur Entfaltung genutzt. Eine Weitfeldbeleuchtung mit scharfer Kante stellt im weitesten Sinne eine Strukturierung der Beleuchtung dar. Besonders vorteilhaft ist die Anwendung des Verfahrens außerdem in Reflexion (ohne Fluoreszenz), da gewöhnlich die Signal zu Rausch-Verhältnisse in Reflexion deutlich besser sind (beispielsweise Punktscanner in der Materialmikroskopie).

Spinning Disc: Die Verwendung des Verfahrens in einem spinning disc-Aufbau ist ebenfalls vorteilhaft. Dabei wird nur durch die Disk beleuchtet und auf einer Kamera ohne pinhole detektiert. Die Konfokalität kann durch Software/Bildverarbeitung auf der Kamera erfolgen (Virtual pinhole). Hier kann die Genauigkeit, mit der das Scanning zur Detektion und Probe steht, in die Fertigung der Scheibe fließen, was extrem vorteilhaft ist und Fehlerquellen für die Verrechnung vermeidet.

SPIM: Die SPIM-Technologie ist beispielsweise in DE 10257423 A1 und WO 2004/0530558 A1 beschrieben. Die Verwendung des erfindungsgemäßen Verfahrens bringt für SPIM bei Scannen des Lichtblattes einen Auflösungsgewinn in axialer Richtung. Die Auflösungssteigerung lateral kann beispielweise durch eine Strukturierung des Lichtblattes erfolgen, deren Phase scannend durch die Probe geschoben wird. Es ergeben sich alle typischen Vorteile des SPIM plus Auflösungssteigerung.

CARS, SHG, RAMAN: Da Fluoreszenz und Linearität der Anregung in keiner Weise Voraussetzung dieses Verfahrens sind, ergibt sich ebenfalls ein Vorteil für Verfahren wie CARS, Second Harmonic Generation oder stimulated RAMAN.

durch die Probe geschoben wird. Es ergeben sich alle typischen Vorteile des SPIM plus Auflösungssteigerung.

CARS, SHG, RAMAN: Da Fluoreszenz und Linearität der Anregung in keiner Weise Voraussetzung dieses Verfahrens sind, ergibt sich ebenfalls ein Vorteil für Verfahren wie CARS, Second Harmonic Generation oder stimulated RAMAN.

## Patentansprüche

1. Reflexions- oder Fluoreszenzmikroskopieverfahren zur Steigerung der Auflösung eines Laser-Scanning-Mikroskops (LSM) bei der Detektion einer beleuchteten Probe (P), wobei

   - mittels eines Punktlichtstrahls ein Lichtspot (L1) auf der Probe (P) erzeugt wird und der Lichtspot (L1) in mehreren Schritten wiederholt relativ zur Probe (P) verschoben wird,
   - ein Bereich (Pr) der beleuchteten Probe (P) durch das Mikroskop mit einer optischen Auflösung konfokal auf eine Detektoreinrichtung abgebildet wird, mehrere Detektionssignale aufgenommen werden und ein hochauflösendes Bild berechnet wird,
   - der Lichtspot (L1) mittels eines langsamen ersten Scanners (SC1) und eines schnellen zweiten Scanners (SC2) verschoben wird und die konfokale Abbildung nur über den schnellen zweiten Scanners (SC2) erfolgt,
   - der konfokal abgebildete Bereich (Pr) mit einer Schrittweite, die kleiner als die optische Auflösung ist, relativ zum Lichtspot (L1) verschoben wird, und während dieser Verschiebung die mehreren Detektionssignale mit der höchsten erreichbaren optischen Auflösung des Mikroskops aufgenommen werden, die jeweils einer bestimmten Relativverschiebelage zum Lichtspot (L1) entsprechen, wobei bei jedem Schritt des ersten Scanners (SC1) die konfokale Abbildung die Probe (P) mit dem zweiten Scanner (SC2) abrastert, und
   - aus den Detektionssignalen das hochauflösende Bild berechnet wird.

2. Verfahren nach Anspruch 1, wobei die Probe (P) durch den Lichtspot (L1) zur Abgabe von Fluoreszenzstrahlung angeregt wird.

3. Verfahren nach Anspruch 2, wobei die Probe (P) mit nichtlinear anregbaren Fluoreszenzmarkern versehen und diese nichtlinearer zur Abgabe von Fluoreszenzstrahlung angeregt werden, wobei eines der folgenden Mikroskopieverfahren zur Anwendung kommt: STED, RESOLFT, Verwendung photoaktivierbarer Farbstoffe, Verfahren mit Saturierung von Farbstoffen und Multiphotonemikroskopie.

4. Verfahren nach einem der obigen Ansprüche, wobei die Schrittweite unter der Hälfte der Auflösung liegt.

5. Verfahren nach einem der vorangehenden Ansprüche, wobei der Lichtspot (L1) die Probe (P) abrastert.

6. Verfahren nach einem der vorangehenden Ansprüche, wobei der Lichtspot (L1) durch Projektion einer weitfeldbeleuchteten Lochscheibe entsteht.

7. Verfahren nach einem der vorangehenden Ansprüche, wobei der Punktlichtstrahl eine gaußförmige Beleuchtungsfunktion realisiert.

8. Mikroskop zur Ausführung eines Verfahrens nach einem der vorangehenden Ansprüche, umfassend:

   - Mittel zur Erzeugung eines Lichtspots (L1) auf der Probe (P) unter Verwendung eines Punktlichtstrahls,
   - Mittel zur konfokalen Abbildung eines Bereichs (Pr) der beleuchteten Probe (P) mit einer optischen Auflösung auf eine Detektionseinheit zur Detektion von Probenlicht,
   - Mittel zum Erzeugen einer Verschiebung des Lichtspots (L1) in mehreren Schritten wiederholt relativ zur Probe (P) und zum Erzeugen einer Verschiebung des konfokal abgebildeten Bereichs (Pr) relativ zum Lichtspot (L1) mit einer Schrittweite, die kleiner als die optische Auflösung ist, wobei die Mittel zum Erzeugen der Verschiebung des Lichtspots (L1) einen langsamen ersten Scanner (SC1) und einen schnellen zweiten Scanner (SC2) umfassen und die konfokale Abbildung nur über den schnellen zweiten Scanner (SC2) erfolgt,

- Detektions- und Speichermittel zum Aufnehmen mehrerer Detektionssignale mit der höchsten erreichbaren optischen Auflösung während der Verschiebung des konfokal abgebildeten Bereichs (Pr) relativ zum Lichtspot (L1), wobei jedes Detektionssignal einer bestimmten Relativverschiebelage zum Lichtspot (L1) entspricht, wobei bei jedem Schritt des ersten Scanners (SC1) die konfokale Abbildung die Probe (P) mit dem zweiten Scanner (SC2) abrastert, und

- Mittel zur Verrechnung der Einzelbilder und Erzeugung eines hochaufgelösten Bildes aus den Einzelbildern.

9. Mikroskop nach Anspruch 8, das eine weitfeldbeleuchtete Nipkowscheibe zur Erzeugung des Lichtspots (L1) aufweist.

**Claims**

1. Reflection or fluorescence microscopy method for increasing the resolution of a laser scanning microscope (LSM) when detecting an illuminated sample (P), wherein

   - a light spot (L1) is generated on the sample (P) by means of a point light beam, and the light spot (L1) is repeatedly shifted relative to the sample (P) in several steps,
   - an region (Pr) of the illuminated sample (P) is confocally imaged onto a detector device by the microscope with an optical resolution, several detection signals are recorded and a high-resolution image is calculated,
   - the light spot (L1) is shifted by means of a slow first scanner (SC1) and a fast second scanner (SC2), and the confocal imaging is performed only via the fast second scanner (SC2) ,
   - the confocally imaged region (Pr) is shifted relative to the light spot (L1) with a step size that is smaller than the optical resolution,
   and during this displacement, the plurality of detection signals is recorded with the highest achievable optical resolution of the microscope, each of which detection signals corresponds to a specific relative displacement position relative to the light spot (L1), wherein at each step of the first scanner (SC1), the confocal image scans the sample (P) by means of the second scanner (SC2), and
   - the high-resolution image is calculated from the detection signals.

2. Method according to claim 1, wherein the sample (P) is excited by the light spot (L1) to emit fluorescent radiation.

3. Method according to claim 2, wherein the sample (P) is provided with nonlinearly excitable fluorescence markers and these are excited nonlinearly to emit fluorescence radiation, wherein one of the following microscopy methods is used: STED, RESOLFT, use of photoactivatable dyes, methods involving saturation of dyes, and multiphoton microscopy.

4. Method according to one of the above claims, wherein the step size is less than half the resolution.

5. Method according to one of the preceding claims, wherein the light spot (L1) scans the sample (P).

6. Method according to one of the preceding claims, wherein the light spot (L1) is created by projection of a wide-field illuminated pinhole disc.

7. Method according to one of the preceding claims, wherein the point light beam realizes a Gaussian illumination function.

8. Microscope for performing a method according to one of the preceding claims, comprising:

   - means for generating a light spot (L1) on the sample (P) using a point light beam,
   - means for confocally imaging a region (Pr) of the illuminated sample (P) with an optical resolution onto a detection unit for detecting sample light,
   - means for repeatedly generating a displacement of the light spot (L1) in several steps relative to the sample (P) and for generating a displacement of the confocally imaged region (Pr) relative to the light spot (L1) with a step size that is smaller than the optical resolution, wherein the means for generating the displacement of the light spot (L1) comprise a slow first scanner (SC1) and a fast second scanner (SC2) and the confocal imaging is performed only via the fast second scanner (SC2),
- detection and storage means for recording a plurality of detection signals with the highest achievable optical resolution during the displacement of the confocally imaged region (Pr) relative to the light spot (L1), each detection signal corresponding to a specific relative displacement position relative to the light spot (L1), wherein at each step of the first scanner (SC1), the confocal imaging scans the sample (P) by means of the second scanner (SC2), and
- means for processing the individual images and generating a high-resolution image from the individual images.

9. Microscope according to claim 8, which has a wide-field illuminated Nipkow disc for generating the light spot (L1).

**Revendications**

1. Procédé de microscopie à réflexion ou à fluorescence pour augmenter la résolution d'un microscope à balayage laser (LSM) lors de la détection d'un échantillon éclairé (P), dans lequel

- un spot lumineux (L1) est généré sur l'échantillon (P) à l'aide d'un faisceau lumineux ponctuel et le spot lumineux (L1) est déplacé de manière répétée par rapport à l'échantillon (P) en plusieurs étapes,
- une zone (Pr) de l'échantillon éclairé (P) est représentée de manière confocale par le microscope avec une résolution optique sur un dispositif de détection, plusieurs signaux de détection sont enregistrés et une image haute résolution est calculée,
- le spot lumineux (L1) est déplacé à l'aide d'un premier scanner lent (SC1) et d'un deuxième scanner rapide (SC2) et la reproduction confocale s'effectue uniquement via le deuxième scanner rapide (SC2) ,
- la zone représentée de manière confocale (Pr) est déplacée par rapport au spot lumineux (L1) avec un pas inférieur à la résolution optique, et pendant ce déplacement, les multiples signaux de détection correspondant à une position de déplacement relative déterminée par rapport au spot lumineux (L1) sont enregistrés avec la résolution optique maximale atteignable du microscope, l'image confocale balayant l'échantillon (P) avec le deuxième scanner (SC2) à chaque pas du premier scanner (SC1), et
- l'image haute résolution est calculée à partir des signaux de détection.

2. Procédé selon la revendication 1, dans lequel l'échantillon (P) est excité par le spot lumineux (L1) pour émettre un rayonnement fluorescent.

3. Procédé selon la revendication 2, dans lequel l'échantillon (P) est muni de marqueurs fluorescents pouvant être excités de manière non linéaire et ceux-ci sont excités de manière non linéaire pour émettre un rayonnement fluorescent, l'un des procédés de microscopie suivants étant utilisé: STED, RESOLFT, utilisation de colorants photoactivables, procédé avec saturation de colorants et microscopie multiphotonique.

4. Procédé selon l'une des revendications précédentes, dans lequel le pas est inférieur à la moitié de la résolution.

5. Procédé selon l'une des revendications précédentes, dans lequel le spot lumineux (L1) balaye l'échantillon (P).

6. Procédé selon l'une des revendications précédentes, dans lequel le spot lumineux (L1) est créé par projection d'un disque perforé éclairé par un champ large.

7. Procédé selon l'une des revendications précédentes, dans lequel le faisceau lumineux ponctuel réalise une fonction d'éclairage gaussienne.

8. Microscope pour la mise en œuvre d'un procédé selon l'une des revendications précédentes, comprenant:

- des moyens pour générer un spot lumineux (L1) sur l'échantillon (P) en utilisant un faisceau lumineux ponctuel,
- des moyens pour former une image confocale d'une zone (Pr) de l'échantillon (P) éclairé avec une résolution optique sur une unité de détection pour détecter la lumière de l'échantillon,
- des moyens pour générer un déplacement du spot lumineux (L1) en plusieurs étapes de manière répétée par rapport à l'échantillon (P) et pour générer un déplacement de la zone formant une image confocale (Pr) par rapport au spot lumineux (L1) avec un pas inférieur à la résolution optique, les moyens pour générer le déplacement du spot lumineux (L1) comprenant un premier scanner lent (SC1) et un deuxième scanner rapide (SC2), et l'imagerie confocale étant réalisée uniquement via le deuxième scanner rapide (SC2),
- des moyens de détection et de stockage pour enregistrer plusieurs signaux de détection avec la résolution optique la plus élevée possible pendant le déplacement de la zone confocale (Pr) par rapport au spot lumineux (L1), chaque signal de détection correspondant à une position de déplacement relative spécifique par rapport au spot lumineux (L1), l'image confocale balayant l'échantillon (P) avec le deuxième scanner (SC2) à chaque étape du premier scanner (SC1), et
- des moyens pour calculer les images individuelles et générer une image à haute résolution à partir des images individuelles.

9. Microscope selon la revendication 8, qui comprend un disque de Nipkow éclairé par un champ large pour générer le spot lumineux (L1).

Fig.1

Fig.2

Fig. 3

P

Ov

G

u.U.

F

TL

i

Piezo

Gitter verschiebbar

Fluoreszenzlicht

DE/ CCD

18

Fig. 4

Laserlicht
(Anregung)

Scanner

Filter

CCD or PMT- or APD- or CMOS-Array
(Two in One:
Detektor und Pinhole )

SCO

TL

Fig. 5

Objektiv

Spezies

EP 3 667 391 B1

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- US 20090219607 A1
- US 5043570 A
- US 5866911 A
- DE 4416558 C2
- US 6633432 B
- DE 10325460 A1
- US 5867604 A
- EP 1157297 B1
- WO 2006127692 A
- DE 102006021317 A1
- WO 2007009812 A1
- US 20090147354 A1
- WO 2004053558 A1
- DE 19702753
- EP 500717 B2
- DE 10257423 A1
- WO 20040530558 A1

### In der Beschreibung aufgeführte Nicht-Patentliteratur

- **M. BARTH et al.** BOOSTING THE OPTICAL TRANSFER FUNCTION WITH A SPATIALLY RESOLVING DETECTOR IN A HIGH NUMERI-CAL APERTURE CONFOCAL REFLECTION MICRO-SCOPE. *Optik, Wissenschaftliche Verlagsgesell-schaft*, April 1994, vol. 96 (2), ISSN 0030-4026, 53-58
- **EGNER et al.** *Biophysical Journal*, November 2007, vol. 93, 3285-3290
- **HELL, S. W.** Far-Field Optical Nanoscopy. *Science*, 2007, vol. 316, 1153-1158
- **FUJITA et al.** *Phys. Rev. Lett.*, 2007
- **YAMANAKA et al.** *J. Biomed. Opt.*, 2008
- **R. HEINTZMANN** ; **T.M. JOVIN** ; **C. CREMER**. Saturated pattemed excitation microscopy - A concept for optical resolution improvement. *J. Opt. Soc. Am. A*, 2002, vol. 19 (8), 1599-1609